(19) 

**Europäisches Patentamt**

**European Patent Office**

**Office européen des brevets**

(11) **EP 4 659 990 A1**

(12) **EUROPEAN PATENT APPLICATION**

(43) Date of publication:
**10.12.2025 Bulletin 2025/50**

(21) Application number: **24180622.3**

(22) Date of filing: **06.06.2024**

(51) International Patent Classification (IPC):
**B60L 15/20** (2006.01)  **B60L 15/32** (2006.01)
**B60L 15/38** (2006.01)  **B60W 20/12** (2016.01)
**B60W 30/14** (2006.01)  **B60W 40/10** (2012.01)

(52) Cooperative Patent Classification (CPC):
**B60L 15/2045; B60L 15/32; B60L 15/38;**
**B60W 20/12; B60W 30/143; B60W 40/1005;**
B60L 2240/12; B60L 2240/421; B60L 2240/423;
B60L 2240/64; B60L 2240/642; B60L 2240/645;
B60L 2240/647; B60L 2240/66; B60L 2260/54;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Volvo Car Corporation**
**405 31 Göteborg (SE)**

(72) Inventors:
- **Torinsson, Juliette**
  **405 31 Göteborg (SE)**
- **Jonasson, Mats**
  **405 31 Göteborg (SE)**
- **Yang, Derong**
  **405 31 Göteborg (SE)**

(74) Representative: **Nederlandsch Octrooibureau**
**P.O. Box 29720**
**2502 LS The Hague (NL)**

(54) **ENERGY EFFICIENT SPEED RECOMMENDATION BASED ON LUMPED POWERTRAIN EFFICIENCY FOR ELECTRIC VEHICLES**

(57)    A computer-implemented method for improved energy usage for a vehicle comprising a motor system comprising a plurality of motor devices, the method comprising obtaining first data indicative of power efficiency of the motor system at different vehicle speeds, obtaining second data indicative of a topography of an upcoming road segment to be travelled by the vehicle, determining third data indicative of power efficiency for the topography of the upcoming road segment at different vehicle speeds based on the first data and the second data, and determining a recommended vehicle speed based on a resistance force acting on the vehicle and the third data.

## Fig. 6

**(Cont. next page)**

(52) Cooperative Patent Classification (CPC): (Cont.)
B60W 2530/10; B60W 2530/16; B60W 2552/15;
B60W 2552/20

**EP 4 659 990 A1**

## Description

### Technical Field

The current disclosure relates to a computer-implemented method for improved energy usage for a vehicle comprising a motor system comprising a plurality of motor devices. The disclosure relates further to an apparatus for improved energy usage for a vehicle comprising a motor system comprising a plurality of motor devices.

### Background Art

Electric vehicles are often provided with different powertrain configurations wherein some of those powertrain configurations involve more than one electric machine or motor device of the electric vehicle. Some configurations might be more energy efficient than others.

### Summary of Invention

According to a first aspect, the disclosure comprises a computer-implemented method for improved energy usage, for example by identifying and applying optimal vehicle speed and/or torque distribution, for a vehicle comprising a motor system comprising a plurality of motor devices, the method comprises obtaining first data indicative of power efficiency of the motor system at different vehicle speeds, obtaining second data indicative of a topography of an upcoming road segment to be travelled by the vehicle, determining third data indicative of power efficiency for the topography of the upcoming road segment at different vehicle speeds based on the first data and the second data, and determining a recommended vehicle speed based on a resistance force acting on the vehicle and the third data.

In this way, vehicle speed recommendations can be provided on how to drive in a more energy or power efficient way. The recommended vehicle speed may be selected within the speed limit of the road where the vehicle is circulating. In some cases, the vehicle may decrease power or energy consumption by increasing speed and/or allocating torque among the machines or motor devices used for propulsion of the vehicle in a particular way.

Energy and/or power consumption can be reduced by creating a so-called lumped efficiency map based on the power optimal torque distribution between available motor devices, and obtaining recommended vehicle speed, thereby guiding the driver to drive in a more energy efficient manner through speed recommendations, as well as the attainable capability of the electric machines or motor devices.

According to embodiments of the disclosure, the method may further comprise applying the recommended vehicle speed, or causing the recommended vehicle speed to be applied.

The first data may be further indicative of different torque distribution combinations between the motor devices based on power efficient, and the method may further comprise determining a recommended torque distribution based on the recommended vehicle speed and the first data.

In this way, recommended vehicle speed and the corresponding torque distribution can be found simultaneously, guiding the driver to drive in a more energy efficient manner through speed recommendations within the attainable capability of the electric machines or motor devices.

The recommended vehicle speed may be determined based on a vehicle state and/or environmental information, wherein the vehicle state may comprise at least one of a vehicle speed and a state of vehicle tires, and the environmental information comprises at least one of a change of road topology of the upcoming road segment of the vehicle and a wind speed. This allows to further improve energy usage for the vehicle, as said information have a great impact on energy and power consumption.

Obtaining the first data may comprise the steps of obtaining information expressing, in other words, describing how respective parameter is related to one another, e.g. by means of a function, the relation between at least two of vehicle speed, torque and power efficiency for each motor device, and determining, based on the obtained information, for each motor device, efficient torque distribution combinations between the motor devices by calculating combined power efficiency for the different vehicle speeds and different torque distributions, and selecting at least one torque distribution among the different torque distributions for which the combined power efficiency is above an efficiency threshold.

The resistance force acting on the vehicle for the upcoming road segment at a vehicle speed among the different vehicle speeds may be determined based on a total force required by the vehicle to maintain constant vehicle speed among the different vehicle speeds of the upcoming road segment.

The total force may be determined based on a rolling resistance coefficient, a mass of the vehicle, a gravitational acceleration, the topology of the upcoming road segment, an air density, a drag coefficient, a vehicle frontal area and the corresponding vehicle speed.

The total force may be further determined as follows:

$$Total\ force = C_{rr}mgcos(\Phi) + mgsin(\phi) + 0.5\rho_{air}A_fC_dv_x^2$$

wherein $C_{rr}$ is the rolling resistance coefficient, m is the mass of the vehicle, $g$ is the gravitational acceleration, $\phi$ is the topology of the upcoming road segment, $\rho_{air}$ is the air density, $A_f$ is the frontal area of the vehicle, $C_d$ is the drag coefficient and $v_x$ is the corresponding vehicle speed.

The recommended vehicle speed may be identified to minimize power loss.

The recommended vehicle speed may be identified to minimize energy consumption.

Identifying the recommended vehicle speed may comprise determining energy consumption based on a distance, the third data and the recommended torque distribution combinations.

The second data may be obtained based on received map information.

The second data may be obtained based on received sensor information.

According to another aspect, the disclosure comprises a control unit for a vehicle configured to obtain first data indicative of lumped map information comprising an indication of power efficiency of the motor system at different vehicle speeds and optimal torque distribution combinations among the motor devices, acquire second data indicative of a slope of a road ahead of the vehicle, determine third data indicative of power efficiency for the acquired slope at the different vehicle speeds based on the first data, and identify fourth data indicative of the optimal vehicle speed based on a resistance force acting on the vehicle and the third data.

The control unit may be further configured to perform any of the steps of the above disclosed method, such as for example causing the recommended vehicle speed to be applied.

According to a further aspect, the disclosure comprises a vehicle comprising the above disclosed control unit.

**Brief Description of Drawings**

Figure 1 illustrates a block diagram of a vehicle system comprising a control unit according to the disclosure.

Figure 2 illustrates a flowchart schematically depicting a method for improved energy usage for a vehicle comprising a motor system comprising a plurality of motor devices according to the disclosure.

Figure 3 shows an example of the information expressing the relation between vehicle speed, torque and power efficiency for one of the motor devices.

Figure 4 shows a diagram depicting optimal torque distribution to total torque force for one of the motor devices according to the disclosure.

Figure 5 shows a diagram depicting powertrain efficiency for certain torque distributions according to the disclosure.

Figure 6 shows a graph representation of the power efficiency for a road segment having a 5% slope according to the disclosure.

Figure 7 shows an example of a software architecture to implement a method according to the disclosure.

**Description of Embodiments**

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The term "vehicle" as used herein refers to a thing used for transporting people or goods. Automobiles, passenger cars, trucks, or buses etc. are examples of vehicles. The term "vehicle" also includes electric vehicle (EV) powered by an electric motor that draws current from an on-vehicle energy storage device, such as a battery, which is rechargeable from an off-vehicle source, such as residential or public electric service or an on-vehicle fuel powered generator. The EV may be two or more wheeled vehicles manufactured for use primarily on public streets, roads. The EV may be referred to as an electric car, an electric automobile, an electric road vehicle (ERV), a plug-in vehicle (PV), a plug-in vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

Through the disclosure, the following terms may be interchangeably used: the term first data may be referred as the mapped power efficiency data, the term second data may be referred as the road topography data, and the term third data may be referred as the current power efficiency data.

Multiple drive sources, for example two, one per each front or rear wheel pair, or four, one per each wheel, for a passenger car, or motor devices enable the possibility to distribute the total torque demand over the multiple electric machines while minimizing power losses to improve the energy efficiency and thereby extend the driving range of the electric vehicle.

Apart from powertrain control, motion control such as velocity trajectories offers opportunities to reduce energy consumption further. In autonomous vehicles, the vehicle motion can be planned and controlled through algorithms designed to minimize the energy consumption.

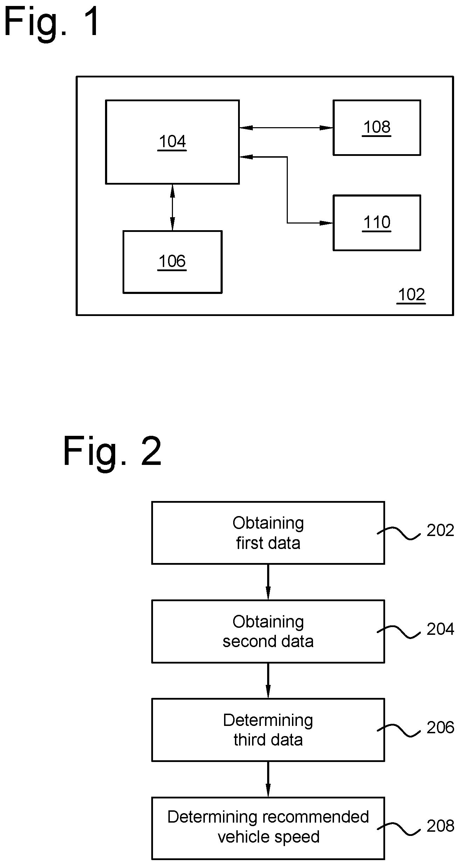

Figure 1 illustrates a block diagram of a vehicle system 102 according to the disclosure. The vehicle system 102 may comprise a control or processing unit 104, a memory 106, a sensor unit 108, and a communication unit 110. The control or processing unit 104 is connected to the memory 106, the sensor unit 108, and the communication unit 110. The communication unit 110 may transmit and receive information via Bluetooth, through a wireless communication network, for example, a 4G network, and/or using any other suitable communication technology.

Figure 2 illustrates a flowchart schematically depicting a method for improved energy usage for a vehicle comprising a motor system comprising a plurality of motor devices according to the disclosure. The method of Figure 2 may be performed by the vehicle system 102, particularly by the control or processing unit 104, of Figure 1.

In step 202, the method comprises obtaining first data (mapped power efficiency data) indicative of power efficiency of the motor system at different vehicle speeds.

After obtaining the first data in step 202, the method of Figure 2 proceeds to step 204 wherein the control unit 104 acquires second data indicative (road topography data) of a topography of an upcoming road segment to be travelled by the vehicle.

The method proceeds after step 204 to step 206 wherein third data (current power efficiency data) indicative of power efficiency for the topography of the upcoming road segment at different vehicle speeds based on the first data and the second data is determined by the control unit 104.

Finally, the method of Figure 2 proceeds to step 208 wherein a recommended vehicle speed is determined based on a resistance force acting on the vehicle and the third data. According to embodiments of the disclosure, the method may further comprise a, not shown, step of causing the recommended vehicle speed to be applied.

The recommended vehicle speed in step 208 may be determined to maximize power efficiency of the motor system based on a vehicle state and/or environmental information. Alternatively, the recommended vehicle speed in step 208 may be identified to minimize energy consumption of the motor system based on a vehicle state and/or environmental information.

The vehicle state may comprise at least one of a vehicle speed and a state of vehicle tires. The environmental information may comprise at least one of a change of road topology of the upcoming road segment and a wind speed. For instance, the change of road topology of the upcoming road segment may comprise a change of slope of the upcoming road segment. However, the vehicle state and/or the environmental information may comprise any other suitable information.

The first data obtained in step 202 may be further indicative of different torque distribution combinations between the motor devices based on power efficient. Then the method may further comprise, in step 210, obtaining a recommended torque distribution based on the recommended vehicle speed and the first data. In that case, the recommended vehicle speed in step 208 may be determined by obtaining energy consumption based on distance, the third data or current power efficiency and the recommended torque distributions combinations.

Furthermore, the first data in step 202 may be obtained in some embodiments by obtaining information expressing the relation between at least two of vehicle speed, torque and power efficiency for each motor device and determining, based on the obtained information, for each motor device, the (essentially) optimal torque distribution combinations between the motor devices by calculating combined power efficiency for the different vehicle speeds and different torque distributions, and selecting at least one torque distribution among the different torque distributions for which the combined power efficiency is above an efficiency threshold.

The second data indicative of the topography of the upcoming road segment to be travelled by the vehicle may be acquired in step 204 of Figure 2 based on received map information or could be determined based on received sensor information.

The resistance force acting on the vehicle for the upcoming road segment at a vehicle speed among the different vehicle speeds may be determined based on a total force required by the vehicle to maintain constant vehicle speed among the different vehicle speeds of the upcoming road segment.

The total force may be determined based on a rolling resistance coefficient, a mass of the vehicle, a gravitational acceleration, the acquired slope, an air density, a drag coefficient, a vehicle frontal area and the corresponding vehicle speed.

For instance, the total force may be determined according to the following equation:

$$Total\ force = C_{rr}mgcos(\Phi) + mgsin(\phi) + 0.5\rho_{air}A_f C_d v_x^2$$

wherein $C_{rr}$ is the rolling resistance coefficient, m is the mass of the vehicle, $g$ is the gravitational acceleration, $\phi$ is the acquired slope, $\rho_{air}$ is the air density, $A_f$ is the frontal area of the vehicle, $C_d$ is the drag coefficient and $v_x$ is the corresponding vehicle speed.

The disclosure may be further explained in relation to an example for a vehicle equipped with a motor system comprising two electrical machines or motor devices, one on the front axle and one on the rear axle. However, what will be said in relation to the example can be extrapolated for a motor system comprising any number of motor devices.

Each of the two motor devices can be described through information expressing the relation between at least two of vehicle speed, torque and power efficiency for the corresponding motor device.

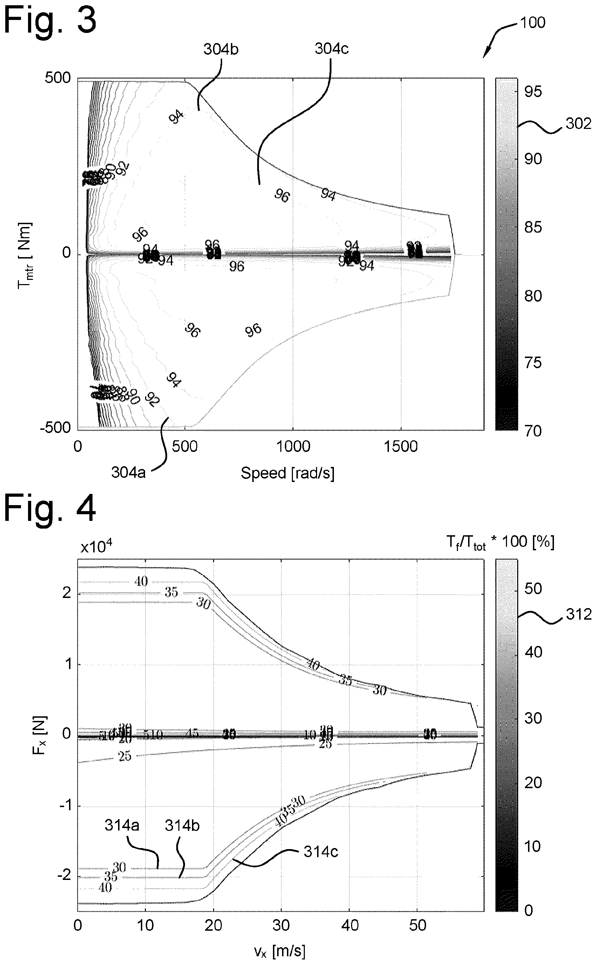

Figure 3 shows an example of the information expressing the relation between vehicle speed, torque and power efficiency for one of the motor devices. That is, Figure 3 shows an associated power loss map containing information about power loses of the respective motor device in a vehicle speed and torque space.

The horizontal axis of Figure 3 corresponds to the vehicle speed in radians per second (rad/s), the vertical axis corresponds to the torque in Newton-meters (Nm), the bar 302 provides a legend to indicate the percentage of power efficiency associated to the different lines 304 shown in Figure 3. The associated percentage of power efficiency is also indicated with a number on the corresponding line among lines 304. For instance, line 304a indicates the combinations of vehicle speed and torque that lead to a 92 percentage of power efficiency, line 304b indicate the combinations of vehicle speed and torque that lead to a 94 percentage of power efficiency, and line 304c indicate the combinations of vehicle speed and torque that lead to a 96 percentage of power efficiency.

As said, Figure 3 illustrates the losses by showing iso-lines for power efficiency with angular speed and torque on the x and y axis respectively. For a particular angular speed, torque can be generated at various efficiencies.

When using two electric machines, for example one per front wheel of a vehicle or one per rear wheel of the vehicle, the torque can be split in between them, to achieve the overall best efficiency. By performing a grid search of speed and torque of the two machines using the information expressing the relation between vehicle speed, torque and power efficiency for each of the motor devices, as shown in FIG. 3 for one of the motor devices, it is possible for each vehicle speed and torque demand to identify the most power efficient solution of torque distribution (for instance using brute force optimization or any other kind of optimization method) and, thereby obtaining, for each motor device, the (essentially) optimal torque distribution combinations between the motor devices by calculating combined power efficiency for the different vehicle speeds and different torque distributions. The method is also applicable for vehicles using four electric machines, hence, one per wheel if the vehicle is a passenger car.

Figure 4 shows a diagram depicting (essentially) optimal (recommended) torque distribution at different vehicle speeds and total forces for one of the motor devices of the example.

The horizontal axis of Figure 4 corresponds to the vehicle speed in meters per second (m/s), the vertical axis corresponds to the total force required in Newtons (N), the bar 312 provides a legend to indicate the distribution between total torque and torque at the front of the vehicle in percentage. The associated percentages of bar 312 is also indicated with a number on the corresponding line among lines 314. For instance, line 314a indicates a 30 percentage, line 314b indicates a 35 percentage, and line 314c indicates a 40 percentage.

The first data indicative of power efficiency of the motor system at different vehicle speeds is obtained by computing the electrical machine or motor device power losses from all motor devices using a linear combination of them according to power-loss minimal solution from the grid search for each vehicle speed and torque value in the lumped efficiency map shown in Figure 4. Hence, the lumped efficiency map of Figure 4 may be considered as an average motor device loss map, with a smart weighting with a higher weight for motor devices with higher efficiency. The idea by using a lumped efficiency map is that the configuration consisting of several motor devices or electrical machines can be treated as one electrical machine or motor device.

**Example of how to determine the recommended vehicle speed and/or torques based on power efficiency**

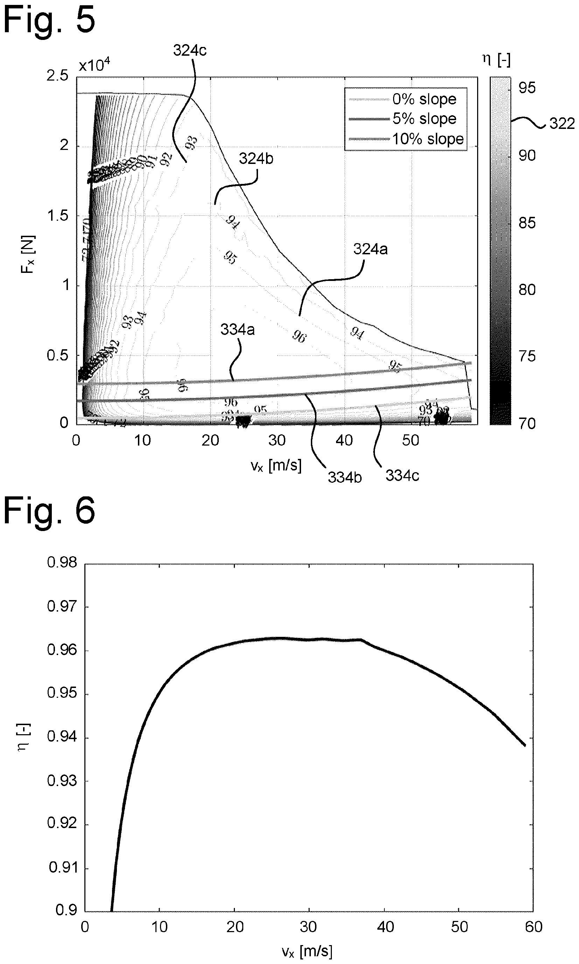

In Figure 5, the traction diagram (or vehicle operational map) including iso-lines of the complete powertrain efficiency provided the most power efficient torque distribution is shown.

The horizontal axis of Figure 5 corresponds to the vehicle speed in meters per second (m/s), the vertical axis corresponds to the total force required by the vehicle to maintain constant vehicle speed in Newtons (N), the bar 322 provides a legend to indicate the percentage of power efficiency associated to the different lines 324 shown in Figure 5. The associated percentage of power efficiency is also indicated with a number on the corresponding line among lines 324. For instance, line 324a indicates the combinations of vehicle speed and total force that lead to a 95 percentage of power efficiency, line 324b indicate the combinations of vehicle speed and total force that lead to a 94 percentage of power efficiency, and line 324c indicate the combinations of vehicle speed and total force that lead to a 93 percentage of power efficiency.

Furthermore, as said, the road load i.e. the total force required for a vehicle to maintain a constant vehicle speed is given by

$$Total\ force = F_{x,req} = C_{rr}mgcos(\Phi) + mgsin(\phi) + 0.5\rho_{air}A_fC_dv_x^2 \quad \text{Equation 1}$$

Wherein, assuming that the vehicle has no acceleration, $C_{rr}$ is the rolling resistance coefficient, m is the mass of the vehicle, $g$ is the gravitational acceleration, $\phi$ is the topology of the upcoming road segment, $\rho_{air}$ is the air density, $A_f$ is the frontal area of the vehicle, $C_d$ is the drag coefficient and $v_x$ is the corresponding vehicle speed.

The required total force for a typical passenger vehicle is plotted in figure 5 for three different road slopes: 1% in line 334c, 5% in line 334b and 10% in line 334a.

For a given slope, e.g. 5% (in line 334b) the variation of power efficiency can be found by making a "cut" along the corresponding road load line 334b in figure 5 and flipping it to the y-axis which is shown in figure 6.

Figure 6 shows a graph representation of the power efficiency for a road topography having 5% of slope. The horizontal axis of Figure 6 corresponds to the vehicle speed in meters per second (m/s) and the vertical axis corresponds to the power efficiency of the motor system. As Figure 6 shows, by increasing the vehicle speed from e.g. 10 to 15m/s, the power efficiency of the motor system is improved by approximately 1% unit.

**Example of how to determine the recommended vehicle speed and/or torques based on energy consumption**

The above example described how to obtain recommended vehicle speed and torque distribution to maximize the power efficiency. Maximizing the power efficiency is however not the same as minimizing the energy consumption.

We will now describe an example of how to obtain recommended vehicle speed and torque distribution to minimize the energy consumption. The energy consumption $E_{in}$ is the energy delivered from the energy source (battery) of the vehicle to the propulsion or motor system.

If a slope $\phi$ is constant for the road ahead the vehicle, the vehicle speed is constant and the vehicle should drive a distance s, then the energy consumption $E_{in}$ is:

$$E_{in} = \int_0^{t_f} P_{in}dt = \int_0^{t_f} \frac{P_{out}}{\eta_p}dt = \int_0^{t_f} \frac{F_{x,req}*v_x}{\eta_p}dt =$$

$$= \int_0^S \frac{F_x(v_x)*v_x}{\eta_p}\frac{1}{v_x}ds = \int_0^S \frac{F_x(v_x)}{\eta_p(F_x(v_x),v_x)}ds = \frac{F_x(v_x)\cdot s}{\eta_p(F_x(v_x),v_x)} \quad \text{Equation 2}$$

Where $F_x(v_x)$ is the total force or motion resistance described in equation 1. $F_x(v_x)$ varies with the vehicle speed $v_x$, but since the vehicle speed $v_x$ is assumed to be constant, $F_x(v_x)$ is constant with respect to time and distance s ahead the vehicle. Moreover, $\eta_p(F_x(v_x),v_x)$ is the lumped efficiency map (which is illustrated in Figure 3), which depends on the total force which in turn depends on the vehicle speed $v_x$.

To find the recommended vehicle speed that gives the lowest energy consumption the following problem should be solved:

$$v_x^* = \arg min\left(\frac{F_x(v_x)}{\eta_p(F_x(v_x),v_x)}\right)$$

One way to solve the problem on-board the vehicle is to sweep vehicle speed from zero to a maximum vehicle speed and compute $E_{in}$ for each vehicle speed, and then simply select as recommended vehicle speed the vehicle speed that has the lowest $E_{in}$.

Below it is shown a simple algorithm that could be used for that purpose:

Different values for the vehicle speed $v_x$ are considered. In this case, $v_x$ varies from 0 m/s to 30 m/s in steps of 0.1. Also, a road slope of the road segment to be travelled by the vehicle is estimated.

For each of said vehicle speeds and road slope, power efficiency values ($\eta_p(F_x(v_x),v_x)$) are obtained using a lump efficiency map like the one of Figure 5, and $\frac{F_x(v_x)}{\eta_p(F_x(v_x),v_x)}$ is calculated.

After performing above-described operations, the vehicle speed that gives the smallest $E_{in}$ is selected as the recommended vehicle speed $v_x^*$.

Using the function $F_x(v_x)$, the total force for the recommended vehicle speed $v_x^*$ is obtained. From said total force for the recommended vehicle speed $v_x^*$ and recommended vehicle speed $v_x^*$ and using the (essentially) optimal torque distribution map shown in Figure 4, the recommended torque distribution is obtained.

As a result, the method will find both the recommended speed and torques that minimizes the energy consumption over a horizon with a slope that is assumed to be constant, e.g. 200m. The slope can for example be retrieved from a map.

**Example of how to select to minimize power efficiency or energy consumption.**

Depending on the state of the vehicle, which may comprise, for instance, a vehicle speed and a state of vehicle tires, the aim can be to minimize power efficiency or energy consumption. For instance, if the goal is to minimize cost for energy, then minimization of energy consumption may be chosen.

As another example, if it is likely that the vehicle speed or the slope of the road segment to be travelled by the vehicle will change, then minimizing power efficiency may be preferred. This is also the case if high power efficiency is needed, e.g. to minimize heat losses in the short term. The method might weight all these factors to decide which minimization is more appropriated.

As already explained, a method for obtaining recommended vehicle speed for energy consumption or powertrain efficiency is provided. The method obtains recommended vehicle speed v* for minimizing power losses in a vehicle equipped with a plurality of electrical machines or motor devices by applying a required torque function T=f(v) to a predetermined range of vehicle speeds (v), applying an (essentially) optimal power loss map Ploss=f(v,T) as shown in Figure 4 for the combination of electrical machines or motor devices, determining the slope ahead the vehicle, obtaining the recommended vehicle speed v* within the speed range that corresponds to the maximum power efficiency, which is found by solving an optimization problem that finds the recommended speed v* maximizing power efficiency constrained to the torque function T=f(v).

Furthermore, the method might obtain the recommended vehicle speed v* within an obtained speed range that corresponds to the minimum energy consumption, which is found by solving an optimization problem that finds the v* minimizes energy consumption constrained to the torque function T=f(v).

According to an example of the disclosure, an (essentially) optimal power loss map for the combination of electrical machines may be obtained by obtaining individual power loss maps for each of the electrical machines, obtaining an (essentially) optimal torque distribution among the plurality of electrical machines by analyzing the individual power loss maps, and obtaining a combination of torque outputs for the electrical machines that results in maximum power efficiency (a "fused/lumped" power loss map).

The torque function may be obtained by collecting data regarding motion resistance of the vehicle, analyzing the collected data to establish a relationship between vehicle speed and required torque, and then formulating a torque function T=f(v) that specifies the total required torque output from the vehicle's electrical machines T at different vehicle speeds v to maintain efficient operation.

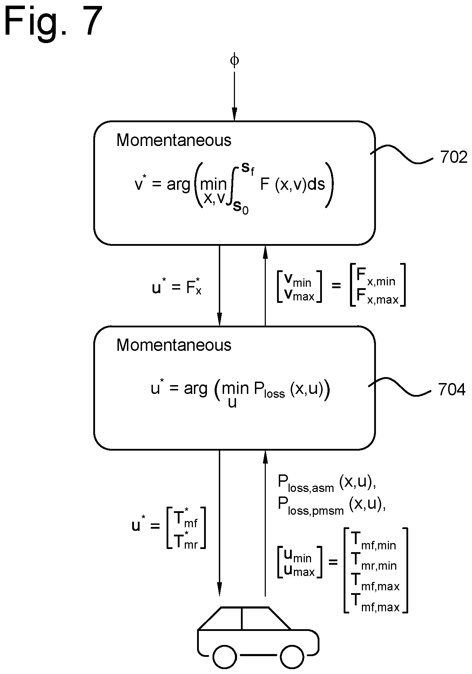

Finally Figure 7 shows an example of a software architecture to implement the method described above, where the predictive optimization layer 702 solves the problem of obtaining the recommended vehicle speed for energy optimization given knowledge of the combined powertrain efficiency, and the momentaneous optimization layer 704 solves the problem of obtaining the recommended torque allocation u* for power optimization given a total required force. The momentaneous optimization layer 704 uses the power loss maps and the capability limits of all motor devices. The predictive optimization layer 702 observes then the constraints on vehicle speeds v and tire longitudinal forces Fx are complied with.

Those skilled in the art will appreciate that the methods, systems and components described herein may comprise, in whole or in part, a combination of analog and digital circuits and/or one or more appropriately programmed processors (e.g., one or more microprocessors including central processing units (CPU)) and associated memory, which may include stored operating system software, firmware and/or application software executable by the processor(s) for controlling operation thereof and/or for performing the particular algorithms represented by the various functions and/or operations described herein, including interaction between and/or cooperation with each other as well as transmitters and receivers. One or more of such processors, as well as other digital hardware, may be included in a single ASIC (Application-Specific Integrated Circuitry), or several processors and various digital hardware may be distributed among several separate components, whether individually packaged or assembled into a SoC (System-on-a-Chip).

Furthermore, the systems, methods and components described, and/or any other arrangement, unit, system, device or module described herein may for instance be implemented in one or several arbitrary nodes comprised in the host vehicle and/or one or more separate data processing devices. In that regard, such a node or device may comprise what generally is referred to as an electronic control unit (ECU), a vehicle control unit (VCU), a (single or double) vehicle core computer, VCC, or any other suitable electronic device, which may be a main or central node. Such node(s) or data processing device(s) is(are) herein generally referred to as control unit (for a vehicle). It should also be noted that the these may further comprise or be arranged or configured to cooperate with any type of storage device or storage arrangement known in the art, which may for example be used for storing input or output data associated with the functions and/or operations described herein. The systems, components and methods described herein may further comprise any computer hardware and software and/or electrical hardware known in the art configured to enable communication therebetween.

The ordinary skilled person will recognize that when herein referring to "optimal", "optimized", "optimum", "maximum", minimum", "maximize", "minimum", "maximal", "minimal", etc. what is considered is the, given the current context and situation, essentially or approximately e.g. optimal, maximal or minimal value, or similar, and that such value, or similar, may of practical considerations and reasons deviate from the theoretically e.g. optimal, maximal or minimal value.

For further clarification of the disclosure, aspects of the disclosure are defined by the following embodiments:

Embodiment 1. A computer-implemented method for improved energy usage for a vehicle comprising a motor system comprising a plurality of motor devices, the method comprising:

   obtaining (202) first data indicative of power efficiency of the motor system at different vehicle speeds;

   obtaining (204) second data indicative of a topography of an upcoming road segment to be travelled by the vehicle;

   determining (206) third data indicative of power efficiency for the topography of the upcoming road segment at different vehicle speeds based on the first data and the second data; and

   determining (208) a recommended vehicle speed based on a resistance force acting on the vehicle and the third data.

Embodiment 2. The method according to embodiment 1, wherein the first data further is indicative of different torque distribution combinations between the motor devices based on power efficiency, and wherein the method further comprises determining (210) a recommended torque distribution based on the recommended vehicle speed and the first data.

Embodiment 3. The method according to any of the preceding embodiments, wherein the recommended vehicle speed is determined (208) based on a vehicle state and/or environmental information, wherein the vehicle state comprises at least one of:

   a vehicle speed and a state of vehicle tires,
   and the environmental information comprises at least one of:

a change of road topology of the upcoming road segment of the vehicle and a wind speed.

Embodiment 4. The method according to any of embodiment 2 and 3, when embodiment 3 is dependent on embodiment 2, wherein obtaining (202) the first data comprises the steps of:

> obtaining information expressing the relation between at least two of vehicle speed, torque and power efficiency for each motor device; and
> determining, based on the obtained information, for each motor device, the optimal torque distribution combinations between the motor devices by calculating combined power efficiency for the different vehicle speeds and different torque distributions, and selecting at least one torque distribution among the different torque distributions for which the combined power efficiency is above an efficiency threshold.

Embodiment 5. The method according to any of the previous embodiments, wherein the resistance force acting on the vehicle for the upcoming road segment at a vehicle speed among the different vehicle speeds is determined based on a total force required by the vehicle to maintain constant vehicle speed among the different vehicle speeds of the upcoming road segment.

Embodiment 6. The method according to embodiment 5, wherein the total force is determined based on a rolling resistance coefficient, a mass of the vehicle, a gravitational acceleration, the topology of the upcoming road segment, an air density, a drag coefficient, a vehicle frontal area and the corresponding vehicle speed.

Embodiment 7. The method according to embodiment 6, the total force is determined as follows:

$$Total\ force = C_{rr}mgcos(\Phi) + mgsin(\phi) + 0.5\rho_{air}A_fC_dv_x^2$$

wherein $C_{rr}$ is the rolling resistance coefficient, m is the mass of the vehicle, $g$ is the gravitational acceleration, $\phi$ is the topology of the upcoming road segment, $\rho_{air}$ is the air density, $A_f$ is the frontal area of the vehicle, $C_d$ is the drag coefficient and $v_x$ is the corresponding vehicle speed. Embodiment 8. The method according to any of the preceding embodiments, wherein the recommended vehicle speed is identified (208) to minimize power loss.

Embodiment 9. The method according to any of the preceding embodiments, wherein the recommended vehicle speed is identified (208) to minimize energy consumption.

Embodiment 10. The method according to embodiment 9, wherein identifying the recommended vehicle speed comprises determining energy consumption based on a distance, the third data and the recommended torque distribution combinations.

Embodiment 11. The method according to any of the previous embodiments, wherein the second data is obtained (204) based on received map information.

Embodiment 12. The method according to any of the previous embodiments, wherein the second data is obtained (204) based on received sensor information.

Embodiment 13. A control unit for a vehicle configured to:

> obtain (202) first data indicative of lumped map information comprising an indication of power efficiency of the motor system at different vehicle speeds and optimal torque distribution combinations among the motor devices;
>
> acquire second data indicative of a slope of a road ahead of the vehicle;
>
> determine third data indicative of power efficiency for the acquired slope at the different vehicle speeds based on the first data; and
>
> identify (208) fourth data indicative of the optimal vehicle speed based on a resistance force acting on the vehicle and the third data.

Embodiment 14. The control unit according to embodiment 13 further configured to perform any of the steps of embodiments 2-12.

Embodiment 15. A vehicle comprising the control unit according to any of embodiments 13 and 14.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims .

**Claims**

1. A computer-implemented method for improved energy usage for a vehicle comprising a motor system comprising a plurality of motor devices, the method comprising:

   obtaining (202) first data indicative of power efficiency of the motor system at different vehicle speeds;
   obtaining (204) second data indicative of a topography of an upcoming road segment to be travelled by the vehicle;
   determining (206) third data indicative of power efficiency for the topography of the upcoming road segment at different vehicle speeds based on the first data and the second data; and
   determining (208) a recommended vehicle speed based on a resistance force acting on the vehicle and the third data.

2. The method according to claim 1, wherein the first data further is indicative of different torque distribution combinations between the motor devices based on power efficient, and wherein the method further comprises determining (210) a recommended torque distribution based on the recommended vehicle speed and the first data.

3. The method according to any of the preceding claims, wherein the recommended vehicle speed is determined (208) based on a vehicle state and/or environmental information, wherein the vehicle state comprises at least one of:

   a vehicle speed and a state of vehicle tires,
   and the environmental information comprises at least one of:
   a change of road topology of the upcoming road segment of the vehicle and a wind speed.

4. The method according to any of claim 2 and 3, when claim 3 is dependent on claim 2, wherein obtaining (202) the first data comprises the steps of:

   obtaining information expressing the relation between at least two of vehicle speed, torque and power efficiency for each motor device; and
   determining, based on the obtained information, for each motor device, the optimal torque distribution combinations between the motor devices by calculating combined power efficiency for the different vehicle speeds and different torque distributions, and selecting at least one torque distribution among the different torque distributions for which the combined power efficiency is above an efficiency threshold.

5. The method according to any of the previous claims, wherein the resistance force acting on the vehicle for the upcoming road segment at a vehicle speed among the different vehicle speeds is determined based on a total force required by the vehicle to maintain constant vehicle speed among the different vehicle speeds of the upcoming road segment.

6. The method according to claim 5, wherein the total force is determined based on a rolling resistance coefficient, a mass of the vehicle, a gravitational acceleration, the topology of the upcoming road segment, an air density, a drag coefficient, a vehicle frontal area and the corresponding vehicle speed.

7. The method according to claim 6, the total force is determined as follows:

$$Total\ force = C_{rr}mgcos(\Phi) + mgsin(\phi) + 0.5\rho_{air}A_f C_d v_x^2$$

wherein $C_{rr}$ is the rolling resistance coefficient, m is the mass of the vehicle, $g$ is the gravitational acceleration, $\phi$ is the topology of the upcoming road segment, $\rho_{air}$ is the air density, $A_f$ is the frontal area of the vehicle, $C_d$ is the drag coefficient and $v_x$ is the corresponding vehicle speed.

8. The method according to any of the preceding claims, wherein the recommended vehicle speed is identified (208) to minimize power loss.

9. The method according to any of the preceding claims, wherein the recommended vehicle speed is identified (208) to minimize energy consumption.

10. The method according to claim 9, wherein identifying the recommended vehicle speed comprises determining energy consumption based on a distance, the third data and the recommended torque distribution combinations.

11. The method according to any of the previous claims, wherein the second data is obtained (204) based on received map information.

12. The method according to any of the previous claims, wherein the second data is obtained (204) based on received sensor information.

13. A control unit for a vehicle configured to:

   obtain (202) first data indicative of lumped map information comprising an indication of power efficiency of the motor system at different vehicle speeds and optimal torque distribution combinations among the motor devices;
   acquire second data indicative of a slope of a road ahead of the vehicle;
   determine third data indicative of power efficiency for the acquired slope at the different vehicle speeds based on the first data; and
   identify (208) fourth data indicative of the recommended vehicle speed based on a resistance force acting on the vehicle and the third data.

14. The control unit according to claim 13 further configured to perform any of the steps of claims 2-12.

15. A vehicle comprising the control unit according to any of claims 13 and 14.

# Fig. 1

# Fig. 2

# Fig. 3

# Fig. 4

# Fig. 5

# Fig. 6

# Fig. 7

$\phi$

Momentaneous

$$v^* = \arg\left(\min_{x,v}\int_{s_0}^{s_f} F(x,v)\,ds\right)$$

702

$u^* = F_x^*$

$$\begin{bmatrix} v_{min} \\ v_{max} \end{bmatrix} = \begin{bmatrix} F_{x,min} \\ F_{x,max} \end{bmatrix}$$

Momentaneous

$$u^* = \arg\left(\min_u P_{loss}(x,u)\right)$$

704

$$u^* = \begin{bmatrix} T_{mf}^* \\ T_{mr}^* \end{bmatrix}$$

$P_{loss,asm}(x,u),$
$P_{loss,pmsm}(x,u),$

$$\begin{bmatrix} u_{min} \\ u_{max} \end{bmatrix} = \begin{bmatrix} T_{mf,min} \\ T_{mr,min} \\ T_{mf,max} \\ T_{mf,max} \end{bmatrix}$$

Europäisches
Patentamt

European
Patent Office

Office européen
des brevets

## EUROPEAN SEARCH REPORT

**Application Number**

**EP 24 18 0622**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/242111 A1 (AGGOUNE KARIM [US] ET AL) 3 August 2023 (2023-08-03) <br> * figures 1,2,5,3,4 * <br> * paragraphs [0003], [0059], [0066], [0055], [0091], [0056], [0068], [0092], [0087], [0045], [0059], [0006], [0024], [0057] * <br> ----- | 1-15 | INV. <br> B60L15/20 <br> B60L15/32 <br> B60L15/38 <br> B60W20/12 <br> B60W30/14 <br> B60W40/10 |
| X | US 2024/075810 A1 (WON DONG HOON [KR] ET AL) 7 March 2024 (2024-03-07) <br> * paragraphs [0075], [0002], [0047], [0052] - [0053], [0045], [0017], [0048], [0058], [0072], [0075] * <br> * figures 5,1,2 * <br> ----- | 1-15 | |
| X <br><br> A | US 2019/283585 A1 (KOEBLER MARTIN [DE] ET AL) 19 September 2019 (2019-09-19) <br> * figures 7,1B,2,9,13A,13B * <br> * paragraphs [0044], [0038], [0015], [0005], [0009], [0010], [0011], [0109], [0074], [0078], [0081], [0082], [0100] * <br> ----- | 1,3,5-9, 11,12 <br> 2,4,10, 13-15 | |
| | | | **TECHNICAL FIELDS SEARCHED (IPC)** <br><br> B60L <br> B60W |

The present search report has been drawn up for all claims

| Place of search | Date of completion of the search | Examiner |
|---|---|---|
| The Hague | 12 November 2024 | Herrera Caballero, A |

EPO FORM 1503 03.82 (P04C01)

## ANNEX TO THE EUROPEAN SEARCH REPORT
## ON EUROPEAN PATENT APPLICATION NO.

EP 24 18 0622

This annex lists the patent family members relating to the patent documents cited in the above-mentioned European search report.
The members are as contained in the European Patent Office EDP file on
The European Patent Office is in no way liable for these particulars which are merely given for the purpose of information.

12-11-2024

| Patent document cited in search report | Publication date | Patent family member(s) | Publication date |
|---|---|---|---|
| US 2023242111 A1 | 03-08-2023 | CN 118695961 A<br>US 2023242111 A1<br>WO 2023150561 A2 | 24-09-2024<br>03-08-2023<br>10-08-2023 |
| US 2024075810 A1 | 07-03-2024 | KR 20240034960 A<br>US 2024075810 A1 | 15-03-2024<br>07-03-2024 |
| US 2019283585 A1 | 19-09-2019 | NONE | |

EPO FORM P0459

For more details about this annex : see Official Journal of the European Patent Office, No. 12/82